# EUROPEAN PATENT SPECIFICATION

(11) **EP 3 046 393 B1**
(45) Date of publication and mention of the grant of the patent: **16.01.2019**
(21) Application number: 14843676.9
(22) Date of filing: 11.09.2014
(51) Int. Cl.: H04W 88/02

(54) **SWITCHING DEVICE AND METHOD FOR AUTOMATICALLY CONNECTING TO NFC CHIP AND SWITCHING SECURITY ELEMENT**
SCHALTVORRICHTUNG UND -VERFAHREN ZUM AUTOMATISCHEN ANSCHLUSS AN EINEN NFC-CHIP UND SCHALTSICHERHEITSELEMENT
DISPOSITIF DE COMMUTATION ET PROCÉDÉ DE CONNEXION AUTOMATIQUE À UNE PUCE NFC ET ÉLÉMENT DE SÉCURITÉ DE COMMUTATION

(30) Priority: 12.09.2013 CN 201310414374
(43) Date of publication of application: 20.07.2016
(73) Proprietor: China Unionpay Co., Ltd, Shanghai 200135 (CN)
(72) Inventor: CHAI, Hongfeng, Shanghai 200135 (CN); LU, Zhijun, Shanghai 200135 (CN)
(74) Representative: Patentanwälte Magenbauer & Kollegen Partnerschaft mbB
(86) International application number: PCT/CN2014/086268
(87) International publication number: WO 2015/035918

(56) References cited:
- EP-A1- 2 590 107
- WO-A2-2012/080181
- CN-A- 101 820 696
- CN-A- 101 883 176
- CN-A- 102 325 210

## Description

### FIELD OF THE INVENTION

The invention relates to the field of communication technology, and in particular, to a switch device that can be connected to NFC chip and can switch a plurality of secure elements and a method thereof.

### BACKGROUND

Currently, with the rapid development of mobile payment, the technology of NFC (Near Field Communication) is being more and more widely used.

In the NFC technology, a NFC having an antenna and being responsible for a non-contact function is equipped in a cell phone, and a secure element (simplified as SE) communicates with the NFC chip via a SWP (Single Wire Protocol) interface. In this way, the NFC chip can forward command interactive data between the antenna and an external non-contact terminal to the secure element via the SWP for processing. During this process, the NFC chip functions as a protocol converter which converts an external non-contact protocol into a SWP protocol to be transmitted to the secure element. There is only one SWP interface between the NFC chip and the secure element, and one NFC chip can be only connected to one secure element.

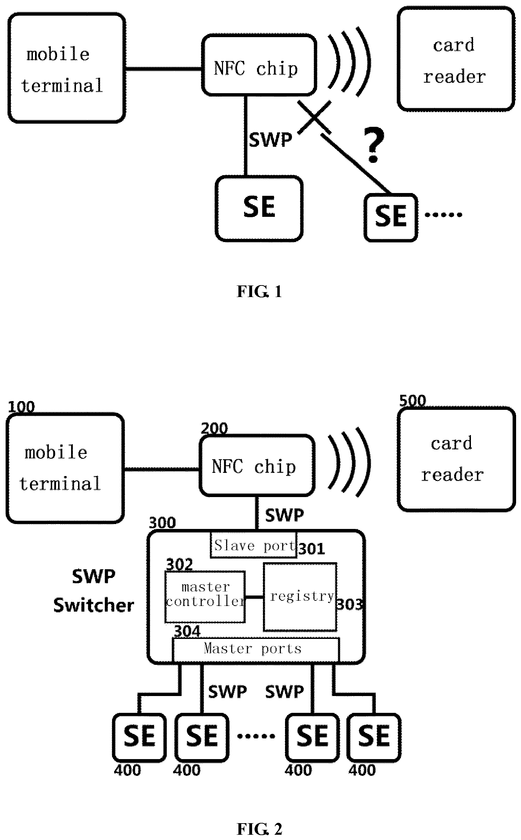

Fig. 1 is a schematic view showing the way of communication between the NFC chip and the secure element in the prior art. As shown in Fig. 1, when the NFC chip possessed by a mobile terminal is placed near an external card reader, the external non-contact protocol is converted into a SWP protocol to be transmitted to the secure element. However, currently, there can be simultaneously a plurality of secure elements existing in the cell phone, such as SIM card, smart SD card, etc. However, when all these secure elements need to use the function of the NFC chip, the NFC chip cannot provide support effectively, as shown in Fig. 1.

In order to meet this requirement, a switch mechanism is used in the prior art, in which the SWP connection between one SE and the NFC chip is switched manually. Such a technology requires that when a user interacts with an external device, it is required to know in advance which secure element the external device will interact with, and then a switch is made manually so that the NFC chip is connected to that secure element. If one device is required to communicate with the plurality of secure elements simultaneously, such frequency manual switches will be very inconvenient. Meanwhile, currently, such a switch mechanism mainly supports a connection of two secure elements and when a plurality of secure elements are connected, such a switch mechanism also cannot provide support very well.

### SUMMARY OF THE INVENTION

In view of the above problem, the invention aims to provide a switch device for automatically connecting to NFC chip and capable of switching a plurality of secure elements. The invention is defined by the independent claims.

Specifically, the invention aims to provide a switch device that can be connected to a plurality of secure element devices so that one NFC chip can be connected to a plurality of secure element devices simultaneously and communicate with them, and that one secure element can be automatically selected based on configuration so as to interact with an external non-contact terminal via the NFC chip.

The switch device for automatically connecting to NFC chip and capable of switching a plurality of secure elements according to the invention is disposed between the NFC chip and the secure elements, characterized by comprising:
a slave port for communicatively connecting to the NFC chip;
master ports for communicatively connecting to the plurality of secure elements respectively;
a registry unit, in which connection information of each secure element and application information of all the applications in each secure element are stored; and
a master controller for controlling the switch device to establish a first channel with the NFC via the slave port, receiving a command sent from the NFC chip via the first channel, looking up the application in a secure element that corresponds to the command in the registry unit according to the command, controlling the switch device to establish a second channel with the corresponding secure element via the master port and to perform information interaction with the corresponding secure element via the second channel.

Preferably, the slave port is communicatively connected to the NFC chip via a SWP protocol, and the master ports are communicatively connected to the plurality of secure elements via the SWP protocol.

Preferably, the number of the slave ports is one, and the master ports can be communicatively connected to the plurality of secure elements respectively.

Preferably, the slave port has a connecting function of the secure element in the SWP protocol connecting process, and the master ports have the connecting function of the NFC in the SWP protocol connecting process.

Preferably, for each secure element, connection information and application information related to the secure element is stored in the registry unit in a one-on-one correspondence.

The invention provides a switch method for enabling a switch device to be automatically connected to NFC chip and capable of switching a plurality of secure elements, characterized by comprising the following steps:
a first channel establishing step, in which a first channel is established between the NFC chip and the switch device, and registry information in a converter is configured;
a command sending step, in which the NFC chip sends a command to the switch device via the first channel;
a second channel establishing step, in which the switch device recognizes the application of a secure element that corresponds to the command from the registry information according to the command, and establishes a second channel with the corresponding secure element; and
an information interacting step in which the switch device performs information interaction with the corresponding secure element via the second channel and the result is returned to the NFC chip via the first channel.

Preferably, in the first channel establishing step, after the NFC chip and the switch device are activated, the first channel is established between the NFC chip and the switch device, and registry information in a converter is configured so that for each secure element, connection information and application information related to the secure element is stored in a one-on-one correspondence.

Preferably, the second channel establishing step comprises the following sub-steps:
the switch device recognizes the application of the secure element which corresponds to the command from the registry information according to the command;
the switch device activates the corresponding secure element; and
the switch device establishes the second channel with the secure element.

Preferably, the information interacting step comprises the following sub-steps:
sending the command to the corresponding secure element via the second channel;
processing the command by the corresponding secure element which receives the command;
returning the processing result of the command to the switch device via the second channel; and
the switch device sending the processing result to the NFC chip via the first channel.

According to the switch device and the switch method of the invention, SWP connection of a plurality of secure elements can be supported, a corresponding secure element can be automatically selected according to a command sent from the card reader, and communication can be activated. Moreover, all the SWP-SE devices are managed collectively by one switch device so that the management of various SWP-SE devices is made easier, and it is easy to expand or delete SWP-SE or the like in one mobile terminal.

### BRIEF DESCRIPTION OF THE DRAWINGS

Fig. 1 is a schematic view showing the way of communication between the NFC chip and the secure element in the prior art.
Fig. 2 is a schematic view showing the configuration of the switch device for automatically connecting to NFC chip and capable of switching a plurality of secure elements according to the invention as well as the way how it communicates with the NFC chip.
Fig. 3 is an exemplary view showing a registry in the switch device of the invention.
Fig. 4 is a flowchart showing the main steps of the switch method of the invention.

### DETAILED DESCRIPTION OF THE UTILITY MODEL

Some of the many embodiments of the invention will be described below with the purpose of providing a basic understanding of the invention rather than identifying key elements or crucial elements of the invention or limiting the scope of protection.

The switch device of the invention allows a plurality of secure elements to be connected and can automatically select a secure element as actually required for processing. The main technical concept of the invention is that in order to connect a plurality of secure elements to the same one NFC chip, a SWP switcher is added between the NFC chip and the secure elements. The SWP switcher is responsible for establishing SWP connection with a plurality of secure elements, which are then connected to the NFC chip via the SWP switcher.

The switch device of the invention will be described below.

Fig. 2 is a schematic view showing the configuration of the switch device for automatically connecting to NFC chip and capable of switching a plurality of secure elements according to the invention as well as the way how it communicates with the NFC chip.

As shown in Fig. 2, a NFC chip 200 and a plurality of secure elements 400 are disposed in a mobile terminal 100. The NFC chip 200 is used for communicating with a card reader 500. A switch device 300 for automatically connecting to NFC chip 200 and capable of switching a plurality of secure elements 400 according to the invention is provided between the NFC chip 200 and the plurality of secure elements 400.

The switch device 300 comprises a slave port 301, a master controller 302, a registry 303 and master ports 304.

The slave port 301 is a port for communicatively connecting to the NFC chip 200. The master ports 304 are ports for communicatively connecting to the plurality of secure elements 400 respectively. Connection information of each secure element and application information of all the applications in each secure element are stored in the registry 303. The master controller 302 is used for controlling the switch device 300 to establish a first SWP channel (the SWP channel between the NFC 200 and the slave port 301 in Fig. 2) with the NFC chip 200 via the slave port 301, receiving a command sent from the NFC chip 200 via the first SWP channel, looking up the application in a secure element that corresponds to the command in the registry 303 according to the command, controlling the switch device 300 to establish a second SWP channel (the plurality of SWP channels between the master ports 304 and the plurality of secure elements 400 in Fig. 2) with the corresponding secure element via the master ports 304 and performing information interaction with the corresponding secure element via the second SWP channel.

Specifically, the NFC chip 200 is connected to the switch device 300 via SWP. For the NFC chip 200, the switch device 300 can be considered as a secure element. Therefore, the SWP switcher has to possess the connecting function of secure element in the SWP protocol connecting process (herein, the connecting function refers to a process of establishing SWP protocol communication with the secure element, and reference is made to international standard ETSI TS 102.613 and 102.622). One slave port 301 is required for connecting the SWP switcher with the NFC chip 200. The function possessed by the slave port 301 is consistent with the SWP interface in the secure element.

The switch device 300 has a plurality of SWP interfaces. For each secure element, the original SWP interface is kept unchanged. These secure elements 400 are connected to the switch device 300. For these secure elements 400, the switch device 300 is equivalent to a NFC chip. Therefore, the SWP switcher possesses the connecting function of NFC in the SWP protocol connecting process. A specific secure element can be SWP activated, which can be accomplished by the master ports 304.

The function accomplished by the master controller 302 is to control the switch device 300 to establish a SWP channel with the NFC chip 200 and receive a command sent from the NFC chip 200 via this channel. The switch device 300 establishes a SWP channel with a specific secure element, and sends the command received previously from the NFC chip 200 to this secure element. Meanwhile, a result generated by this secure element is sent to the NFC chip 200 in an opposite direction.

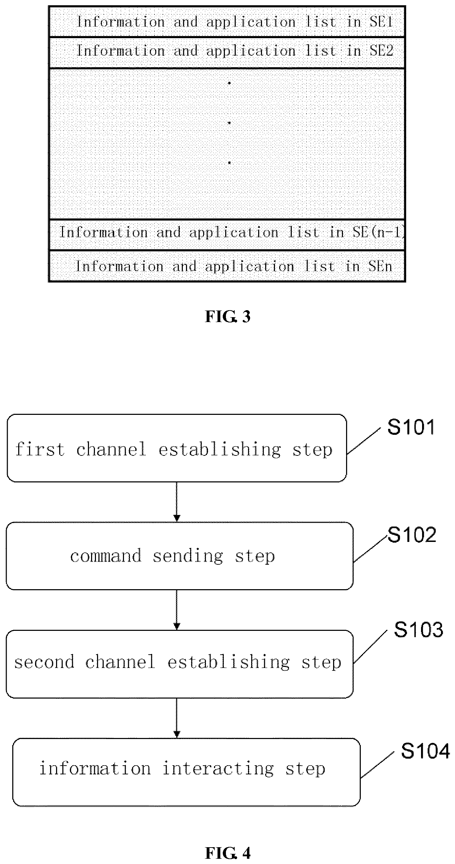

Relevant connection information (e.g., card reader mode, card mode, etc.) of all the secure elements 400 connected to the switch device 300 and all the application information in each secure element are recorded in the registry 303 of the switch device 300, wherein one secure element corresponds to one item in the registry. Fig. 3 is an exemplary view showing a registry in the switch device of the invention. As shown in Fig. 3, information and application lists in SE1, SE2, ...SE(n-1) and SE(n-2) are stored in the registry.

The master controller 302 establishes a connection mode with the NFC chip 200 according to information in the registry 303, and decides which secure element to activate when the master controller 302 receives a specific application selecting command. The mobile terminal 100 or the SE 400 can set and manage the registry 303 via the established SWP channel. Herein, the above connection information refers to card reader mode, card mode and P2P mode that each SE corresponds to, and the application information refers to information required in a real achieving process such as AID of application that each SE corresponds to.

When the application program in the card reader 500 is to establish communication with a certain application in a certain secure element, firstly, the card reader 500 sends a APDU command (Application Protocol Data Unit, which is a set of application protocols used in a smart card, referring to international standard ISO7816-4) to the NFC chip 200 via the SWP connection channel. After receiving the APDU command, the NFC chip 200 forwards it to the switch device 300. After the slave port 301 of the switch device 300 receives the command, the master controller 302 controls the slave port 301 to look up this secure element and application information thereof in the registry 302, thus determining which secure element the APDU should be forwarded to. In this way, the master controller 302 controls transmission of the APDU command to this secure element, which processes the APDU command and returns the result of processing to the switch device 300 after processing.

The switch method for achieving automatic connection and switching secure elements using the switch device 300 of the invention will be described below.

Fig. 4 is a flowchart showing the main steps of the switch method of the invention.

The switch method of the invention is a method which enables an automatic connection to the NFC chip 200 using the switch device 300 and can switch a plurality of secure elements 400, and mainly comprises the following steps:
a first channel establishing step S101, in which firstly the NFC chip 200 is activated, and the switch device 300 is activated; a first SWP channel is established between the NFC chip 200 and the switch device 300, and the registry 303 in the converter 300 is configured so that for each secure element, connection information and application information related to the secure element is stored in a one-on-one correspondence;
a command sending step S102, in which the NFC chip 200 sends the APDU command to the switch device via the first channel;
a second channel establishing step S103, in which the switch device recognizes the application of a secure element that corresponds to the APDU command from the registry information according to the APDU command, and establishes a second SWP channel with the corresponding secure element; and
an information interacting step S104 in which the switch device performs information interaction with the corresponding secure element via the second SWP channel and the result is returned to the NFC chip 200 via the first SWP channel.

The second channel establishing step S103 comprises the following sub-steps:
the switch device 300 recognizes the application of the secure element which corresponds to the APDU command from the registry 303 according to the APDU command;
the switch device 300 activates the corresponding secure element; and
the switch device 300 establishes the second SWP channel with the secure element.

Further, the information interacting step S104 comprises the following sub-steps:
sending the APDU command to the corresponding secure element via the second SWP channel;
processing the APDU command by the corresponding secure element which receives the command;
returning the processing result of the command to the switch device 300 via the second SWP channel; and
the switch device 300 sending the processing result to the NFC chip 200 via the first SWP channel.

According to the switch device and the switch method of the invention, SWP connection of a plurality of secure elements can be supported, a corresponding secure element can be automatically selected according to a command sent from the card reader, and communication can be activated. Moreover, all the SWP-SE devices are managed collectively by one switch device so that the management of various SWP-SE devices is made easier, and it is easy to expand or delete SWP-SE or the like in one mobile terminal.

The above embodiments mainly describe the switch device and switch method that enable automatic connection with the NFC chip and can switch a plurality of secure elements. While only some of the specific embodiments have been described, those skilled in the art will understand that the invention can be carried out in many other forms without departing from the scope thereof. Therefore, the examples and embodiments given herein should be considered as illustrative rather than limiting. The invention may cover various modifications and substitutes without departing from the scope of the invention defined by appended claims.

## Claims

1. A switch device for automatically connecting to NFC chip and capable of switching a plurality of secure elements, said switch device is disposed between the NFC chip and the secure elements, comprising:
a slave port for communicatively connecting to the NFC chip;
master ports for communicatively connecting to the plurality of secure elements respectively;
a registry unit, in which connection information of each secure element and application information of all the applications in each secure element are stored, wherein, for each secure element, connection information and application information related to the secure element is stored in the registry unit in a one-on-one correspondence; and
a master controller for controlling the switch device to establish a first channel with the NFC via the slave port, receiving a command sent from the NFC chip via the first channel, looking up the application in a secure element that corresponds to the command in the registry unit according to the command, controlling the switch device to establish a second channel with the corresponding secure element via the master port and to perform information interaction with the corresponding secure element via the second channel.

2. A switch device for automatically connecting to NFC chip and capable of switching a plurality of secure elements according to claim 1, **characterized in that**,
the slave port is communicatively connected to the NFC chip via a SWP protocol; and
the master ports are communicatively connected to the plurality of secure elements via the SWP protocol.

3. A switch device for automatically connecting to NFC chip and capable of switching a plurality of secure elements according to claim 1, **characterized in that**,
the number of the slave port is one, and the master ports can be communicatively connected to the plurality of secure elements respectively.

4. A switch device for automatically connecting to NFC chip and capable of switching a plurality of secure elements according to claim 1, **characterized in that**,
the slave port has a connecting function of the secure element in the SWP protocol connecting process, and the master ports have the connecting function of the NFC in the SWP protocol connecting process.

5. A switch method for enabling a switch device to be automatically connected to NFC chip and capable of switching a plurality of secure elements, comprising the following steps:
a first channel establishing step, in which a first channel is established between the NFC chip and the switch device, and registry information in the switch device is configured so that for each secure element, connection information and application information related to the secure element is stored in a one-on-one correspondence;
a command sending step, in which the NFC chip sends a command to the switch device via the first channel;
a second channel establishing step, in which the switch device recognizes the application of a secure element that corresponds to the command from the registry information according to the command, and establishes a second channel with the corresponding secure element; and
an information interacting step in which the switch device performs information interaction with the corresponding secure element via the second channel and the result is returned to the NFC chip via the first channel.

6. The switch method for enabling a switch device to be automatically connected to NFC chip and capable of switching a plurality of secure elements according to claim 5, **characterized in that**,
in the first channel establishing step, after the NFC chip and the switch device are activated, the first channel is established between the NFC chip and the switch device.

7. The switch method for enabling a switch device to be automatically connected to NFC chip and capable of switching a plurality of secure elements according to claim 6, **characterized in that**,
the second channel establishing step comprises the following sub-steps:
the switch device recognizes the application of the secure element which corresponds to the command from the registry information according to the command;
the switch device activates the corresponding secure element; and
the switch device establishes the second channel with the secure element.

8. The switch method for enabling a switch device to be automatically connected to NFC chip and capable of switching a plurality of secure elements according to claim 7, **characterized in that**,
the information interacting step comprises the following sub-steps:
sending the command to the corresponding secure element via the second channel;
the corresponding secure element which receives the command processing the command;
returning the processing result of the command to the switch device via the second channel; and
the switch device sending the processing result to the NFC chip via the first channel.

## Patentansprüche

1. Schaltvorrichtung zum automatischen Verbinden mit einem NFC-Chip und fähig, eine Mehrzahl an sicheren Elementen zu schalten, wobei die Schaltvorrichtung zwischen dem NFC-Chip und den sicheren Elementen angeordnet ist, umfassend:
einen Slave-Port zum kommunikativen Verbinden mit dem NFC-Chip;
Master-Ports zum jeweiligen kommunikativen Verbinden mit der Mehrzahl von sicheren Elementen;
eine Registereinheit, in welcher Verbindungsinformation von jedem sicheren Element und Anwendungsinformation von all den Anwendungen in jedem sicheren Element gespeichert sind, wobei für jedes sichere Element Verbindungsinformation und
Anwendungsinformation bezogen auf das sichere Element in der Registereinheit gespeichert ist, in einer eins-zu-eins-Korrespondenz; und
eine Master-Steuerung zum Steuern der Schaltvorrichtung, um einen ersten Kanal mit dem NFC über den Slave-Port herzustellen, Empfangen eines Befehls, der von dem NFC-Chip gesendet wird, über den ersten Kanal, Suchen der Anwendung in einem sicheren Element, das dem Befehl entspricht, in der Registereinheit, gemäß dem Befehl, Steuern der Schaltvorrichtung um einen zweiten Kanal mit dem entsprechenden sicheren Element herzustellen, über den Master-Port, und um eine Informationsinteraktion mit dem entsprechenden sicheren Element über den zweiten Kanal durchzuführen.

2. Schaltvorrichtung zum automatischen Verbinden mit einem NFC-Chip und fähig, eine Mehrzahl von sicheren Elementen zu schalten, gemäß Anspruch 1,
**dadurch gekennzeichnet, dass**
der Slave-Port kommunikativ mit dem NFC-Chip über ein SWP-Protokoll verbunden ist; und
die Master-Ports kommunikativ verbunden sind mit der Mehrzahl von sicheren Elementen über das SWP-Portokoll.

3. Schaltvorrichtung zum automatischen Verbinden mit einem NFC-Chip und fähig, eine Mehrzahl von sicheren Elementen zu schalten, gemäß Anspruch 1,
**dadurch gekennzeichnet, dass**
die Anzahl des Slave-Ports 1 ist und dass die Master-Ports kommunikativ verbunden werden können mit der Mehrzahl von sicheren Elementen, respektive.

4. Schaltvorrichtung zum automatischen Verbinden mit einem NFC-Chip und fähig, eine Mehrzahl von sicheren Elementen zu schalten, gemäß Anspruch 1,
**dadurch gekennzeichnet, dass**
der Slave-Port eine Verbindungsfunktion des sicheren Elements in dem SWP-Protokoll-Verbindungsprozess hat, und die Master-Ports haben die Verbindungsfunktion des NFC in dem SWP-Protokoll-Verbindungsprozess.

5. Schaltverfahren zum Ermöglichen, dass eine Schaltvorrichtung automatisch mit einem NFC-Chip verbunden wird und fähig, eine Mehrzahl von sicheren Elementen zu schalten, umfassend die folgenden Schritte:
einen ersten Kanalherstellungsschritt, bei dem ein erster Kanal zwischen dem NFC-Chip und der Schaltvorrichtung hergestellt wird, und Registerinformation in der Schaltvorrichtung konfiguriert wird, so dass für jedes sichere Element Verbindungsinformation und Anwendungsinformation bezogen auf das sichere Element in einer eins-zu-eins-Korrespondenz gespeichert wird;
einen Befehlsendeschritt, bei welchem der NFC-Chip einen Befehl an die Schaltvorrichtung über den ersten Kanal sendet;
einen zweiten Kanalherstellungsschritt, bei welchem die Schaltvorrichtung die Anwendung eines sicheren Elements erkennt, das dem Befehl entspricht, aus der Registerinformation, gemäß dem Befehl, und einen zweiten Kanal herstellt, mit dem entsprechenden sicheren Element; und
einen Informationsinteraktionsschritt, bei welchem die Schaltvorrichtung eine Informationsinteraktion mit dem entsprechenden sicheren Element durchführt über den zweiten Kanal und das Ergebnis wird an den NFC-Chip über den ersten Kanal zurückgegeben.

6. Schaltverfahren zum Ermöglichen, dass sich eine Schaltvorrichtung automatisch mit einem NFC-Chip verbindet und fähig ist, eine Mehrzahl von sicheren Elementen zu schalten, gemäß Anspruch 5,
**dadurch gekennzeichnet, dass**
bei dem ersten Kanalherstellungsschritt, nachdem der NFC-Chip und die Schaltvorrichtung aktiviert sind, der erste Kanal zwischen dem NFC-Chip und der Schaltvorrichtung hergestellt wird.

7. Schaltverfahren zum Ermöglichen, dass eine Schaltvorrichtung automatisch mit einem NFC-Chip verbunden wird und fähig ist, eine Mehrzahl an sicheren Elementen zu schalten, gemäß Anspruch 6,
**dadurch gekennzeichnet, dass**
der zweite Kanalherstellungsschritt die folgenden Unterschritte umfasst:
die Schaltvorrichtung erkennt die Anwendung des sicheren Elements, das dem Befehl entspricht, aus der Registerinformation, gemäß dem Befehl;
die Schaltvorrichtung aktiviert das entsprechende sichere Element; und
die Schaltvorrichtung stellt den zweiten Kanal mit dem sicheren Element her.

8. Schaltverfahren zum Ermöglichen, dass eine Schaltvorrichtung automatisch mit einem NFC-Chip verbunden wird und fähig ist, eine Mehrzahl an sicheren Elementen zu schalten, gemäß Anspruch 7,
**dadurch gekennzeichnet, dass**
der Informationsinteraktionsschritt die folgenden Unterschritte umfasst:
Senden des Befehls an das entsprechende sichere Element über den zweiten Kanal;
Verarbeiten des Befehls durch das entsprechende sichere Element, das den Befehl empfängt;
Zurückgeben des Verarbeitungsergebnisses des Befehls an die Schaltvorrichtung über den zweiten Kanal; und
Senden, durch die Schaltvorrichtung, des Verarbeitungsergebnisses an den NFC-Chip über den ersten Kanal.

## Revendications

1. Dispositif de commutation pour se connecter automatiquement à une puce NFC et capable de commuter une pluralité d'éléments sécurisés, ledit dispositif de commutation est disposé entre la puce NFC et les éléments sécurisés, comprenant :
un port esclave pour se connecter en communication à la puce NFC ;
des ports maîtres pour se connecter en communication à la pluralité d'éléments sécurisés, respectivement ;
une unité de registre, dans laquelle des informations de connexion de chaque élément sécurisé et des informations d'application de toutes les applications dans chaque élément sécurisé sont stockées, où, pour chaque élément sécurisé, des informations de connexion et des informations d'application relatives à l'élément sécurisé sont stockées dans l'unité de registre en une correspondance individuelle ; et
une unité de commande maître pour commander le dispositif de commutation pour établir un premier canal avec la NFC via le port esclave, pour recevoir une instruction envoyée à partir de la puce NFC via le premier canal, pour chercher l'application dans un élément sécurisé qui correspond à l'instruction dans l'unité de registre en fonction de l'instruction, pour commander le dispositif de commutation pour établir un deuxième canal avec l'élément sécurisé correspondant via le port maître et pour effectuer une interaction d'informations avec l'élément sécurisé correspondant via le deuxième canal.

2. Dispositif de commutation pour se connecter automatiquement à une puce NFC et capable de commuter une pluralité d'éléments sécurisés selon la revendication 1, **caractérisé en ce que**
le port esclave est connecté en communication à la puce NFC via un protocole SWP ; et
les ports maîtres sont connectés en communication à la pluralité d'éléments sécurisés via le protocole SWP.

3. Dispositif de commutation pour se connecter automatiquement à une puce NFC et capable de commuter une pluralité d'éléments sécurisés selon la revendication 1, **caractérisé en ce que**
le numéro du port esclave est égal à un, et les ports maîtres peuvent être connectés en communication à la pluralité d'éléments sécurisés, respectivement.

4. Dispositif de commutation pour se connecter automatiquement à une puce NFC et capable de commuter une pluralité d'éléments sécurisés selon la revendication 1, **caractérisé en ce que**
le port esclave a une fonction de connexion de l'élément sécurisé dans le processus de connexion de protocole SWP, et les ports maîtres ont la fonction de connexion de la NFC dans le processus de connexion de protocole SWP.

5. Procédé de commutation pour permettre à un dispositif de commutation d'être automatiquement connecté à une puce NFC et capable de commuter une pluralité d'éléments sécurisés, comprenant les étapes suivantes :
une étape d'établissement de premier canal, dans laquelle un premier canal est établi entre la puce NFC et le dispositif de commutation, et des informations de registre dans le dispositif de commutation sont configurées de sorte que, pour chaque élément sécurisé, des informations de connexion et des informations d'application relatives à l'élément sécurisé soient stockées en une correspondance individuelle ;
une étape d'envoi d'instruction, dans laquelle la puce NFC envoie une instruction au dispositif de commutation via le premier canal ;
une étape d'établissement de deuxième canal, dans laquelle le dispositif de commutation reconnaît l'application d'un élément sécurisé qui correspond à l'instruction à partir des informations de registre en fonction de l'instruction, et établit un deuxième canal avec l'élément sécurisé correspondant; et
une étape d'interaction d'informations dans laquelle le dispositif de commutation effectue une interaction d'informations avec l'élément sécurisé correspondant via le deuxième canal et le résultat est renvoyé à la puce NFC via le premier canal.

6. Procédé de commutation pour permettre à un dispositif de commutation d'être automatiquement connecté à une puce NFC et capable de commuter une pluralité d'éléments sécurisés selon la revendication 5, **caractérisé en ce que**
dans l'étape d'établissement de premier canal, après l'activation de la puce NFC et du dispositif de commutation, le premier canal est établi entre la puce NFC et le dispositif de commutation.

7. Procédé de commutation pour permettre à un dispositif de commutation d'être automatiquement connecté à une puce NFC et capable de commuter une pluralité d'éléments sécurisés selon la revendication 6, **caractérisé en ce que**
l'étape d'établissement de deuxième canal comprend les sous-étapes suivantes qui consistent :
à reconnaître, par le biais du dispositif de commutation, l'application de l'élément sécurisé qui correspond à l'instruction à partir des informations de registre en fonction de l'instruction ;
à activer, par le biais du dispositif de commutation, l'élément sécurisé correspondant ; et
à établir, par le biais du dispositif de commutation, le deuxième canal avec l'élément sécurisé.

8. Procédé de commutation pour permettre à un dispositif de commutation d'être automatiquement connecté à une puce NFC et capable de commuter une pluralité d'éléments sécurisés selon la revendication 7, **caractérisé en ce que**
l'étape d'interaction d'informations comprend les sous-étapes suivantes qui consistent :
à envoyer l'instruction à l'élément sécurisé correspondant via le deuxième canal ;
à traiter l'instruction par le biais de l'élément sécurisé correspondant qui reçoit l'instruction ;
à renvoyer le résultat de traitement de l'instruction au dispositif de commutation via le deuxième canal ; et
à envoyer, par le biais du dispositif de commutation, le résultat de traitement à la puce NFC via le premier canal.
